# EUROPÄISCHE PATENTSCHRIFT

(11) **EP 0 312 842 B1**
(45) Veröffentlichungstag und Bekanntmachung des Hinweises auf die Patenterteilung: **10.02.1993**
(21) Anmeldenummer: 88116557.5
(22) Anmeldetag: 06.10.1988
(51) Int. Cl.: B32B 5/28, B29C 67/12

(54) **Gefüllte Formmasse**
Filled moulding composition
Masse de moulage chargée

(30) Priorität: 13.10.1987 DE 3734574
(43) Veröffentlichungstag der Anmeldung: 26.04.1989
(73) Patentinhaber: BASF Aktiengesellschaft, 67063 Ludwigshafen (DE)
(72) Erfinder: Gehrig, Heinz, Dr., D-6750 Kaiserslautern (DE)

(56) Entgegenhaltungen:
- DE-A- 2 935 205
- US-A- 4 517 323

## Beschreibung

Die Erfindung betrifft eine Formmasse, die ein härtbares Kunstharz, Füllstoffe sowie Verstärkungsfasern enthält.

Bei der Herstellung von verformbarem Halbzeug aus härtbaren Kunstharzen, sogenannten sheet molding compounds (SMC-Massen) oder bulk molding compounds (BMC-Massen) werden Verstärkungsfasern in Form von Bahnen oder Bändern bzw. in Form von gegebenenfalls geschnittenen Rovings in diskontinuierlich oder kontinuierlich arbeitenden Tränkvorrichtungen mit einer Matrix aus Kunstharz und Füllstoffen imprägniert.

Oft werden bei der Imprägnierung von Verstärkungsmaterialien hohe Füllstoffgehalte gewünscht, um z.B. die Oberflächenqualität oder die Formstabilität von Fertigteilen zu verbessern. Mit steigendem Füllstoffgehalt wird aber die Haftung zwischen Fasern und Matrix verschlechtert, außerdem wird die Kerbwirkung der Füllstoffkörner verstärkt, was ebenfalls zu einem Abfall der Festigkeit und Zähigkeit der ausgehärteten Formkörper führt.

Der Erfindung lag daher die Aufgabe zugrunde, gefüllte Formmassen aus faserverstärkten härtbaren Kunstharzen bereitzustellen, die auch bei hohem Füllstoffgehalt eine gute Haftung zwischen Kunststoffmatrix und Verstärkungsfasern sowie ein hohes mechanisches Eigenschaftsniveau aufweisen.

Diese Aufgabe wird erfindungsgemäß dadurch gelöst, daß das Kunstharz in zwei Schichten auf die Verstärkungsfasern aufgebracht ist:
A. in einer inneren Schicht sind die Fasern mit einer Kunstharz-Komponente A, die bis zu 10 Gew.% Füllstoffe enthält, imprägniert, und
B. in einer äußeren Schicht sind die mit A imprägnierten Fasern mit einer weiteren Kunstharz-Komponente B, die mindestens 20 Gew.% Füllstoffe enthält, beschichtet bzw. ummantelt.

Vorzugsweise betragen der Anteil der Komponente A 10 - 90 Vol.% und der Anteil der äußeren Komponente B 90 - 10 Vol.%, jeweils bezogen auf die Summe aus kunstharz, Füllstoffen und gegebenenfalls Zusatzstoffen.

Zu den einzelnen Bestandteilen ist folgendes zu sagen:
1. Als härtbare Kunstharze kommen die bekannten Reaktionsharze in Frage. Bevorzugt sind ungesättigte Polyesterharze, die im allgemeinen als Lösungen von 80 bis 40 Gew.% ungesättigter Polyester in 20 bis 60 Gew.% eines copolymerisierbarem Monomeren vorliegen. Die Polyester sind Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Rest einwertiger Carbonsäuren oder einwertiger Alkohole enthalten, wobei zumindest ein Teil der Einsatzstoffe über ethylenisch ungesättigte, copolymerisationsfähige Gruppen verfügen muß.
   Als copolymerisierbare, ethylenisch ungesättigte monomere Verbindungen kommen die üblicherweise zur Herstellung ungesättigter Polyesterformmassen verwendeten Allyl- und Vinylverbindungen in Frage, vorzugsweise Styrol.
   In Frage kommen ferner Vinylesterharze. Geeignete endständige ungesättigte Vinylesterharze besitzen die charakteristische Gruppierung -CO-OCH₂CHOH-CH₂O- und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.
   Weiterhin sind Epoxidharze geeignet, die aus einem Polyepoxid und einem Härter bestehen. Bevorzugte Epoxide sind Umsetzungsprodukte aus mehrfach funktionellen Alkoholen, Phenolen, cycloaliphatischen Carbonsäuren, aromatischen Aminen oder Aminophenolen mit Epichlorhydrin. Geeignete Härter sind Polyamine, Polycarbonsäureanhydride und katalytische Härter, z.B. Hydrazide.
   Schließlich können auch Bismaleinimidharze eingesetzt werden. Diese enthalte im allgemeinen ein Bismaleinimid, z.B. aus Maleinsäureanhydrid und einem aromatischen Diamin, sowie ein Comonomeres, z.B. ein aromatisches Diamin, ein Diphenol, ein Aminophenol oder eine Diallyl- oder Divinylverbindung.
   In den Komponenten A und B können gleiche oder verschiedenartige Kunstharze benutzt werden, wobei der gesamte Harzanteil der Formmasse vorzugsweise 15 - 60, insbesondere 20 bis 50 Gew.% beträgt.
2. Als Verstärkungsfasern kommen die üblichen Fasern aus Glas, Kohlenstoff und aromatischem Polyamid in Frage, ferner Metall-, Bor- und Silikat-Fasern. Sie können entweder als Rovings vorliegen, die aus einer Vielzahl von Einzelfilamenten bestehen und im allgemeinen Durchmesser zwischen 5 und 25 µm aufweisen. Sie können auch als Bänder mit einer Breite von 1 bis 500 cm eingesetzt werden, die aus einer Vielzahl von parallelen Rovings bestehen, oder als Bahnen, z.B. in Form von Matten, Vliesen, Geweben oder Gewirken mit einer Breite zwischen 10 und 1500 cm und einer Dicke zwischen 0,5 und 50 mm. Der Gehalt der Formmasse an Verstärkungsfasern beträgt vorzugsweise 10 - 80 Gew.%, insbesondere 20 bis 60 Gew.%.
3. Geeignete Füllstoffe sind übliche feinpulvrige oder körnige, vorzugsweise anorganische Füllstoffe, wie Kreide, Kaolin, Quarzmehl, Dolomit, Schwerspat, Metallpulver, Aluminiumoxidhydrat, Talkum, Kieselgur, sowie Pigmente und Holzmehl.
   Der Gehalt der Formmasse an Füllstoffen beträgt vorzugsweise 10 - 70 Gew.%, insbesondere 30 bis 60 Gew.%.
4. Als weitere übliche Zusatzstoffe kommen in Frage
   - Inhibitoren, wie Hydrochinone, Chinone, Nitrobenzole, N-Nitrosoverbindungen, Salze des zweiwertigen Kupfers und quarternäre Ammoniumsalze,
   - Polymerisationsinitiatoren, wie Benzoylperoxid, Methylethylketonperoxid, tert.-Butylperoktoat, tert.-Butylperbenzoat, Cyclohexanonperoxid, Acetylacetonperoxid, Perketale, Percarbonate, C-C-labile Verbindungen und Azoverbindungen,
   - Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin,
   - Photoinitiatoren, wie Benzilketale, Benzoinether oder Acylphosphinoxide,
   - Schrumpfmindernde Polymerisate, wie Polystyrol, Polymethylmethacrylat, Polyvinylacetat, Polyethylen, Polybutadien und Pfropfcopolymere, Copolymere sowie Kondensationspolymere, wie gesättigte Polyester oder Polyesterurethane,
   - Elastifizierende Zusätze, z.B. kautschukartige Blockcopolymere und modifiziertes Polytetrahydrofuran,
   - Eindickmittel, wie Oxide oder Hydroxide des Lithiums, Magnesiums, Calciums, Aluminiums oder Titans, sowie Isocyanate,
   - Eindickungsbeschleuniger, z.B. Ammoniumchloride, Phosphoniumchloride, Sulfoniumhalogenide, Wasser, Polyole oder Propandiol-1,2,
   - Gleitmittel, wie Zink-, Magnesium- und Calciumstearat sowie Polyalkylenetherwachse,
   - Flammschutzmittel, wie Halogen- oder Phosphorverbindungen,
   - Paraffine zur Verminderung der Monomerenverdunstung und zur Ausbildung einer klebfreien Oberfläche.

Die erfindungsgemäße Formmasse wird zweckmäßigerweise hergestellt, indem man Verstärkungsfasern zunächst mit einer Kunstharz-Komponente A imprägniert, die gegebenenfalls bis zu 10 Gew.%, vorzugsweise bis zu 5 Gew.% und insbesondere überhaupt keine Füllstoffe enthält und dann die imprägnierten Fasern mit einer Kunstharz-Komponente B beschichtet bzw. ummantelt, die mehr als 20 Gew.%, vorzugsweise 25 bis 75 Gew.% Füllstoffe enthält. Bei der Imprägnierung werden die Zwischenräume zwischen den Einzelfilamenten der Verstärkungsfasern vollständig mit der Komponente A, die gut benetzt und eine gute Haftung zu den Fasern hat, ausgefüllt. Danach wird in einem zweiten Arbeitsgang das mit A imprägnierte Verstärkungsmaterial mit der Komponente B beschichtet bzw. umhüllt, wobei die äußere Schicht auch ein anderes Kunstharz erhalten kann als die innere Schicht.

Die beiden Arbeitsgänge können entweder unmittelbar hintereinander (on line) durchgeführt werden. Das Halbzeug kann aber auch nach dem Imprägnierschritt zwischengelagert, wobei z.B. eine Eindickung der Formmasse erfolgen kann. Dann erst wird die äußere Schicht aufgebracht. Falls erforderlich, können auch weitere Schichten auf gleiche Weise aufgebracht werden.

Als Tränkvorrichtungen können die üblichen Imprägnier- und Beschichtungsapparaturen benutzt werden, z.B. Tränkbäder, Tränkkammern, Kneter, Mischer oder Streich- und Ziehvorrichtungen. Eine bevorzugte Apparatur, die insbesondere zum Tränken von Rovings und Bändern geeignet ist, ist in der EP-A 206 134 beschrieben. Die imprägnierten bzw. beschichteten Fasermaterialien können aus den Tränkvorrichtungen z.B. mit Spulmaschinen, Haspeln, Zangengreifern, Raupen- oder Schneckenmaschinen abgezogen werden.

Erfindungsgemäß imprägnierte und beschichtete Rovings können geschnitten und dann als BMC-Spritzmassen weiterverarbeitet werden. Man kann sie aber auch auf Kerne wickeln und auf diese Weise Hohlkörper herstellen.

Erfindungsgemäß imprägnierte und beschichtete Bänder und Bahnen können in flächiger Form mit Dicken bis zu einigen cm als SMC-Masse, z.B. in Form von Platten ausgebreitet und ggf. in verschiedenen Faser-Vorzugsrichtungen übereinanderdrapiert werden.

Die Weiterverarbeitung der erfindungsgemäßen Formmassen kann durch Umformen, z.B. Pressen, Prägen, Biegen oder Tiefziehen erfolgen. Gleichzeitig oder anschließend erfolgt die Aushärtung zum fertigen Formteil, z.B. durch Erhitzen oder Bestrahlung.

Bei der Weiterverarbeitung der Formmassen zu Fertigteilen kann es im Grenzbereich der Schichten A und B zur Ausbildung einer Mischzone kommen, wodurch die hervorragende Tränkung der Verstärkungsfasern jedoch nicht beeinträchtigt wird. An Fertigteilen aus den erfindungsgemäßen Formmassen lassen sich die beiden Schichten durch Schliffuntersuchungen identifizieren.

In den Zeichnungen sind zwei bevorzugte Ausführungsformen schematisch dargestellt.

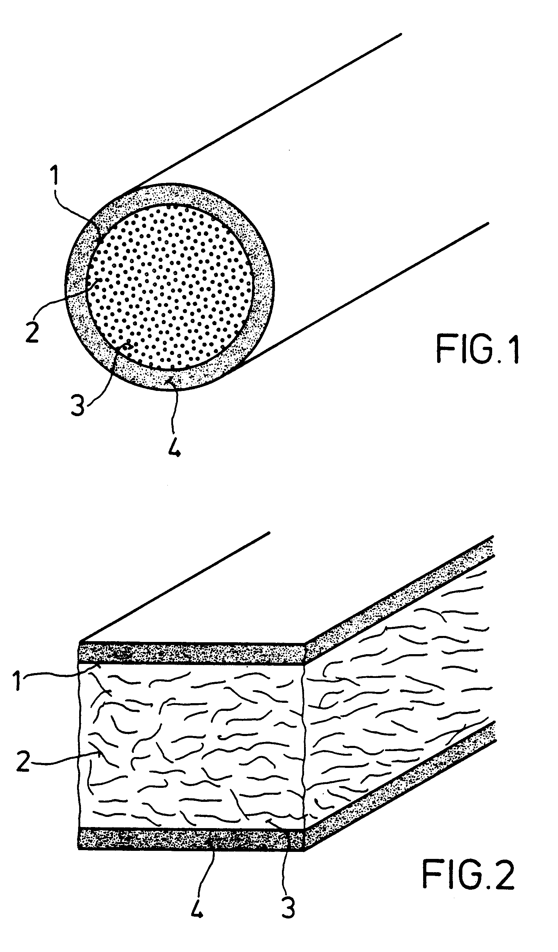

Figur 1 zeigt einen Roving (1), der aus mehreren Einzelfilamenten (2) besteht. Er ist mit der ersten Schicht (3) mit der Kunstharz-Komponente A imprägniert und in der zweiten Schicht (4) mit der Kunstharzkomponente B umhüllt.

Figur 2 zeigt eine Fasermatte (1), die aus einer Vielzahl von ungerichteten Fasern (2) besteht. Sie ist in der inneren Schicht (3) mit der Kunstharz-Komponente A imprägniert und in der äußeren Schicht (4) mit der Kunstharz-Komponente B beschichtet.

## Patentansprüche

1. Gefüllte Formmasse, enthaltend
1. ein härtbares Kunstharz,
2. Verstärkungsfasern in Form von Rovings, Bändern oder Bahnen,
3. Füllstoffe,
sowie gegebenenfalls
4. übliche Zusatzstoffe,
dadurch gekennzeichnet, daß das Kunstharz in zwei Schichten auf die Verstärkungsfasern aufgebracht ist:
A in einer inneren Schicht sind die Fasern mit einer Kunstharz-Komponente A, die bis zu 10 Gew.% Füllstoffe enthält, imprägniert, und
B in einer äußeren Schicht sind die mit A imprägnierten Fasern mit einer weiteren Kunstharz-Komponente B, die mindestens 20 Gew.% Füllstoffe enthält, beschichtet bzw. ummantelt.

2. Gefüllte Formmasse nach Anspruch 1, enthaltend
15 - 60 Gew.% Kunstharz.

3. Gefüllte Formmasse nach Anspruch 1, enthaltend
10 - 80 Gew.% Verstärkungsfasern.

4. Gefüllte Formmasse nach Anspruch 1, enthaltend
10 - 70 Gew.% Füllstoffe.

5. Gefüllte Formmasse nach Anspruch 1, dadurch gekennzeichnet, daß in den Komponenten A und B gleichartige Kunstharze enthalten sind.

6. Gefüllte Formmasse nach Anspruch 1, dadurch gekennzeichnet, daß in den Komponenten A und B verschiedenartige Kunstharze enthalten sind.

7. Gefüllte Formmasse nach Anspruch 1, dadurch gekennzeichnet, daß der Anteil der Komponente A 10 - 90 Vol.% und der Anteil der äußeren Komponente B 90 - 10 Vol.% beträgt, jeweils bezogen auf die Summe aus Kunstharz, Füllstoffen und gegebenenfalls Zusatzstoffen.

8. BMC-Formmasse nach Anspruch 1, dadurch gekennzeichnet, daß die imprägnierten und beschichteten Verstärkungsfasern geschnitten sind.

9. SMC-Formmasse nach Anspruch 1, dadurch gekennzeichnet, daß die imprägnierten und beschichteten Verstärkungsfasern in flächiger Form ausgebreitet sind.

10. Verfahren zur Herstellung der Formmasse nach Anspruch 1, dadurch gekennzeichnet, daß man Verstärkungsfasern zunächst mit einer Kunstharz-Komponente A imprägniert, die bis zu 10 Gew.% Füllstoffe enthält und dann - ggf. nach Zwischenlagerung - mit einer Kunstharz-Komponente B beschichtet bzw. ummantelt, die mindestens 20 Gew.% Füllstoffe enthält.

## Claims

1. A filler-containing molding material, containing
1. a curable synthetic resin,
2. reinforcing fibers in the form of rovings, bands or webs, and
3. fillers,
with or without
4. conventional additives,
wherein the synthetic resin is applied in two layers to the reinforcing fibers:
A in an inner layer, the fibers are impregnated with a synthetic resin component A which contains up to 10% by weight of fillers, and
B in an outer layer, the fibers impregnated with A are coated or surrounded with a further synthetic resin component B which contains not less than 20% by weight of fillers.

2. A filler-containing molding material as claimed in claim 1, containing
15-60% by weight of synthetic resin.

3. A filler-containing molding material, as claimed in claim 1, containing 10-80% by weight of reinforcing fibers.

4. A filler-containing molding material as claimed in claim 1, containing
10-70% by weight of fillers.

5. A filler-containing molding material as claimed in claim 1, wherein the components A and B contain similar synthetic resins.

6. A filler-containing molding material as claimed in claim 1, wherein the components A and B contain different synthetic resins.

7. A filler-containing molding material as claimed in claim 1, wherein the amount of component A is 10-90% by volume and the amount of the outer component B is 90-10% by volume, the percentages in each case being based on the sum of synthetic resin, fillers and any additives.

8. A BMC molding material as claimed in claim 1, wherein the impregnated and coated reinforcing fibers are chopped.

9. An SMC molding material as claimed in claim 1, wherein the impregnated and coated reinforcing fibers are spread out in sheet-like form.

10. A process for the preparation of a molding material as claimed in claim 1, wherein reinforcing fibers are first impregnated with a synthetic resin component A which contains up to 10% by weight of fillers, and then, if necessary after temporary storage, coated or surrounded with a synthetic resin component B which contains not less than 20% by weight of fillers.

## Revendications

1. Masse de moulage chargée, contenant
1. une résine synthétique durcissable,
2. des fibres de renforcement sous forme de rovings, rubans ou bandes,
3. des charges,
ainsi que le cas échéant
4. des additifs usuels,
caractérisée en ce que la résine synthétique est appliquée sur les libres de renforcement en deux coucher :
A dans une couche intérieure, les fibres sont imprégnées avec un composant A de résine synthétique, qui contient jusqu'a 10 % en poids de charges, et
B dans une couche extérieure les libres imprégnées avec A sont recouvertes ou revêtues d'un autre composent B de résine synthétique, qui contient au moins 20 % en poids de charges.

2. Masse de moulage chargée selon la revendication 1, contenant 15 à 60 % en poids de résine synthétique.

3. Masse de moulage chargée selon la revendication 1, contenant 10 à 80 %, en poids de fibres de renforcement.

4. Masse de moulage chargée selon la revendication 1, contenant 10 à 70 % en poids de charges.

5. Masse de moulage chargée selon la revendication 1, caractérisée en ce que les composants A et B contiennent des résines synthétiques de même nature.

6. Masse de moulage chargée selon la revendication 1, caractérisée en ce que les composants A et B contiennent des résines synthétiques de natures différentes.

7. Masse de moulage chargée selon la revendication 1, caractérisée en ce que la proportion du composant A représente 10 à 90% en volume et la proportion du composant extérieur B représente 90 à 10% en volume, chaque fois exprimées par rapport à la somme de la résine synthétique, des charges et éventuellement des additifs.

8. Masse de moulage BMC selon la revendication 1, caractérisée en ce que les fibres de renforcement imprégnées et revêtues sont coupées.

9. Masse de moulage SMC selon la revendication 1, caractérisée en ce que les fibres de renforcement sont déployées sous la forme d'une nappe.

10. Procédé de fabrication de masse de moulage selon la revendication 1, caractérise en ce que l'on imprègne en premier lieu les fibres de renforcement avec un composant A de résine synthétique, qui contient jusqu'a 10 % en poids de charges puis en ce que l'on recouvre ou revêt - éventuellement après entreposage - avec un composant B de résine synthétique, qui contient au moins 20 % en poids de charges.
